# EUROPEAN PATENT APPLICATION

(11) **EP 4 776 366 A1**
(43) Date of publication of application: **15.07.2026**
(21) Application number: 24929437.2
(22) Date of filing: 29.09.2024
(51) Int. Cl.: H01M 10/0525

(54) **FAST-CHARGING CELL, LITHIUM-ION BATTERY, AND ELECTRIC PRODUCT**

(30) Priority: 19.09.2024 CN 202422292822 U
(71) Applicant: ZHEJIANG LIWINON ENERGY TECHNOLOGY CO., LTD., Jinhua, Zhejiang 321102 (CN)
(72) Inventor: Gao, Yunlei, Jinhua, Zhejiang 321102 (CN); Wang, Shengxu, Jinhua, Zhejiang 321102 (CN); Zhang, Qi, Jinhua, Zhejiang 321102 (CN); Liu, Feng, Jinhua, Zhejiang 321102 (CN); Yu, Zilong, Jinhua, Zhejiang 321102 (CN); Chen, Jie, Jinhua, Zhejiang 321102 (CN)
(74) Representative: TRBL Intellectual Property
(86) International application number: PCT/CN2024/122350
(87) International publication number: WO 2026/060743

(57) **Abstract**

A fast-charging battery cell, a lithium-ion battery, and an electric product are disclosed, which relates to the field of new energy technology. **In** the fast-charging battery cell provided, the positive electrode is provided with positive electrode coating gaps, and the negative electrode is provided with negative electrode coating gaps. By optimizing the positions of the positive electrode coating gaps and negative electrode coating gaps, the ability of the negative electrode to accept lithium ions is enhanced, the increase in side reactions is minimized and the pressure at the corners is alleviated. As a result, the rate performance and cycling performance of the fast-charging battery cell are enhanced. A lithium-ion battery and an electric product comprising the above fast-charging battery cell are also provided.

## Description

### FIELD OF THE INVENTION

The present disclosure belongs to the technical field of new energy technology, and in particular relates to a fast-charging battery cell, a lithium-ion battery, and an electric product.

### BACKGROUND OF THE INVENTION

Lithium-ion batteries are widely used in digital and power battery fields due to their high energy density. As the demand for energy density and fast charging rates in digital products and power batteries increases, the areal density and compaction density of lithium-ion battery cells are also increasing. This results in increasingly high pressure on the corner regions of the battery cell during charging and discharging processes. As the pressure compresses, the electrolyte is gradually squeezed out of the corners, ultimately leading to a bridge breaking at the corners.

Corner lithium plating of the battery cell starts from the inner layer and gradually diffuses outward with the deterioration of the inner layer. Taking the centrally positioned tab structure as an example, the most severe corner lithium plating occurs at the anode corners corresponding to the electrode sheet that the cathode tab located on, and gradually decreases outward from the corners. Corner lithium plating generally worsens with increasing cycle numbers until it diffuses throughout the entire electrode.

With the use of silicon-based negative electrode materials in the battery, the issue of corner lithium plating of lithium-ion battery cells has become increasingly severe and occurs at earlier stages. This is partly related to the rapid electrolyte consumption in silicon-based systems. Furthermore, studies have shown that methods such as laser perforation on the negative electrode sheet for enhancing electrolyte retention can damage the structure of silicon-based negative electrode materials, expose highly active materials, increase side reactions, and accelerate electrolyte consumption. Additionally, excessive volume expansion of the negative electrode results in greater pressure at the corners, exacerbating corner lithium plating. In other words, while conventional lithium-ion battery cells also experience corner lithium plating issues, the situation is more severe in fast-charging battery cells containing silicon-based negative electrode materials. Moreover, conventional perforation methods are difficult to alleviate this issue and may degrade performance.

In summary, the issue of corner lithium plating in silicon-based fast-charging battery cells is severe, and the solutions provided in related technologies have very limited effectiveness.

### SUMMARY

The present disclosure aims at solving at least one of the technical problems existing in the prior art described above. Therefore, the present disclosure provides a fast-charging battery cell, which improves the fast-charging performance of battery cells with high energy density.

The present disclosure also provides a lithium-ion battery whose preparation materials include the aforementioned fast-charging battery cell.

The present disclosure further provides an electric product whose preparation materials include the aforementioned fast-charging battery cell.

The fast-charging battery cell according to an example in the first aspect of the present disclosure, is formed by winding a positive electrode, a separator, and a negative electrode; the separator is positioned between the positive electrode and the negative electrode; the negative electrode includes a negative electrode current collector, a negative electrode coating located on a surface of the negative electrode current collector, and a centrally positioned negative electrode tab electrically connected to the negative electrode current collector; the positive electrode includes a positive electrode current collector, a positive electrode coating located on a surface of the positive electrode current collector, and a centrally positioned positive electrode tab electrically connected to the positive electrode current collector;
a positive electrode coating gap is provided on the positive electrode coating at corners of the fast-charging battery cell, starting from the positive electrode tab;
a negative electrode coating gap is provided on the negative electrode coating surrounding a projection position of the positive electrode tab on the negative electrode.

The fast-charging battery cell according to an example of the present disclosure has at least the following beneficial effects:
The fast-charging battery cell provided in the present disclosure adopts a design of localized perforation on the positive electrode and negative electrode, achieving precise control of kinetics. Specifically:
For the fast-charging battery cell with a centrally positioned tab, during the charging, the current density is highest near the positive electrode tab or its projection position on the negative electrode surface. Therefore, in the present disclosure, the positive electrode coating gap is arranged around the positive electrode tab, and the negative electrode coating gap is arranged around the projection position of the positive electrode tab on the negative electrode surface, which can effectively address the issue of insufficient charging and enhances fast-charging performance.

For the wound-type fast-charging battery cell, if the negative electrode has a poor capacity to accept lithium-ions, lithium plating may occur. During charging, the entire surface of the negative electrode accepts lithium ions, so it is necessary to improve the capacity of the entire surface to accept lithium-ions. Therefore, the negative electrode coating gap is arranged around the projection position of the positive electrode tab on the negative electrode across the entire surface. However, the corners are subject to compression during long cycles and electrolyte consumption, so the positive electrode coating gap is only arranged at the corners around the positive electrode tab.

Based on the above description, the solution provided in the present disclosure minimizes the numbers of positive electrode coating gap or negative electrode coating gap while ensuring charging performance.

According to some examples of the present disclosure, a total number of winding layers N of the fast-charging battery cell ranges from 10 to 50. For example, it may specifically be 11 layers, 12 layers, 13 layers, 15 layers, 20 layers, 25 layers, 30 layers, or 40 layers. **The** relationship between the number of layers and the number of corners is that the number of corners = N + 1. For example, if N = 1, the number of corners is 2; if N = 10, the number of corners of the fast-charging battery cell is 11. **In** subsequent calculations of the corner positions for perforating on the positive electrode or negative electrode, the counting of the number of layers starts from the negative electrode opposite to the positive electrode tab. The number of corners increases by 2 each time, meaning that for each layer and each time, one corner is formed on both sides respectively.

According to some examples of the present disclosure, the positive electrode coating gap is a continuous solid-line gap.

According to some examples of the present disclosure, at each corner, the positive electrode coating is provided with one or multiple parallel solid-line gaps (also referred to as grooves). For example, it may specifically be 3, 4, 5, 6, 7, or 8 gaps.

According to some examples of the present disclosure, a width of the positive electrode coating gap is 20 µm to 80 µm. For example, it may specifically be approximately 50 µm or approximately 60 µm. This width refers to the line width of the solid-line gap or the dashed line gap. The width of the negative electrode coating gap is interpreted with reference herein.

According to some examples of the present disclosure, at each corner, a spacing between two adjacent solid-line gaps is 1 mm to 2 mm.

According to some examples of the present disclosure, a depth of the positive electrode coating gap is 1/4 to 2/3 of a thickness of the positive electrode coating. For example, it may specifically be approximately 30%, 40%, 50%, or approximately 60% of the thickness of the positive electrode coating.

If the positive electrode coating gap is a dashed line gap, the depth here refers to a perforation depth, i.e., the maximum depth of the dashed line gap. The depth of the negative electrode coating gap is interpreted with reference herein.

According to some examples of the present disclosure, a thickness of the positive electrode coating is 20 µm to 100 µm. For example, it may specifically be approximately 30 µm, 40 µm, 50 µm, 60 µm, 70 µm, 80 µm, or approximately 90 µm.

According to some examples of the present disclosure, the negative electrode coating gap is a continuous solid-line gap or a dashed line gap formed by connected hole structures.

When the negative electrode coating gap is a solid-line gap, a spacing between two adjacent solid-line gaps is 1 mm to 2 mm. For example, it may specifically be approximately 1.5 mm.

When the negative electrode coating gap is a dashed line gap, it means that at the position where the negative electrode coating gap needs to be set, a hole structure perpendicular to the negative electrode coating is arranged in an array.

According to some examples of the present disclosure, a width of the negative electrode coating gap is 30 µm to 120 µm. For example, it may specifically be approximately 50 µm, 80 µm, or approximately 100 µm.

According to some examples of the present disclosure, a depth of the negative electrode coating gap is 1/4 to 2/3 of a thickness of the negative electrode coating. For example, it may specifically be approximately 30%, 40%, 50%, or approximately 60% of the thickness of the negative electrode coating.

According to some examples of the present disclosure, a thickness of the negative electrode coating is 40 µm to 120 µm. For example, it may specifically be approximately 50 µm, 60 µm, 70 µm, 80 µm, 90 µm, 100 µm, or approximately 110 µm.

According to some examples of the present disclosure, the positive electrode coating gap extends through and across the positive electrode coating; and/or the negative electrode coating gap extends through and across the negative electrode coating. According to some examples of the present disclosure, the total number of winding layers of the fast-charging battery cell is N, and the number of winding layers containing the positive electrode coating gap is n; and 1 ≤ n ≤ N/2. For example, it may specifically be approximately 2, 3N/10, or N/4.

It is effective to provide a positive electrode coating gap on at least one winding layer, thus the lower limit is set to 1. If there are too many positive electrode coating gaps, the occurrence of side reactions will also increase, so the upper limit is set to N/2.

According to some examples of the present disclosure, the fast-charging battery cell satisfies the relationship 3 ≤ n ≤ N/3. For example, it may specifically be 3N/20.

According to some examples of the present disclosure, the total number of winding layers of the fast-charging battery cell is N, and the number of winding layers containing the negative electrode coating gap is m; and 3 ≤ m ≤ N/2.

In the above range, the reason for setting the lower limit value of 3 is to accommodate battery cells with small capacities, such as fast-charging battery cells with only 6 or 10 layers. To match with the positive electrode and to achieve fast-charging performance, negative electrode coating gaps must be provided on at least 3 layers. The upper limit is set to control the occurrence of side reactions to some extent.

According to some examples of the present disclosure, the fast-charging battery cell satisfies the relationship 3 ≤ m ≤ n + 1.

According to some examples of the present disclosure, preparation materials of the negative electrode coating include a silicon-based negative electrode material. Compared with other types of fast-charging battery cells, fast-charging battery cells containing silicon-based negative electrode materials have their particularities. Specifically, silicon-based negative electrode materials consume electrolyte faster than other negative electrode materials. If no perforation is made (i.e., no coating gaps are arranged), a low electrolyte content will lead to severe lithium plating at the corners. If perforation is improperly done, the consumption of electrolyte will be further accelerated, which will still result in lithium plating at the corners. For the fast-charging battery cell provided in the present disclosure, the positions of coating gaps on both the positive electrode and negative electrode, as well as the quantity of coating gaps are adjusted, minimizing damage to the structure of the silicon-based negative electrode materials. Moreover, it effectively balances the relationship between electrolyte retention and consumption, significantly enhancing the fast-charging performance and fast-charging cycling performance of the fast-charging battery cell containing silicon-based negative electrode materials.

According to some examples of the present disclosure, in the fast-charging battery cell, the positive electrode tab and the negative electrode tab are in staggered arrangement. As a result, the positive electrode tab and the negative electrode tab do not contact each other, avoiding short-circuit issues during storage, transportation, and use.

As can be seen from the above description, the fast-charging battery cell provided in the present disclosure adopts a design of localized perforation on the positive electrode and negative electrode, achieving precise control of kinetics. This ensures that there are holes at positions with high charging current density, addressing the issue of insufficient charging. Moreover, no perforation is made at positions with low charging current density, preventing damage to the active materials of the positive electrode and negative electrode, especially the silicon-based negative electrode materials, reducing side reactions of the fast-charging battery cell, thereby decreasing the overall expansion of the fast-charging battery cell during use and optimizing the cycling performance of the fast-charging battery cell.

A lithium-ion battery according to an example in the second aspect of the present disclosure, comprises the fast-charging battery cell and an electrolyte that saturates the fast-charging battery cell.

**The** lithium-ion battery according to an example of the present disclosure has at least the following beneficial effects:
The rate performance and cycling performance are significant improved.

According to some examples of the present disclosure, the lithium-ion battery further comprises a battery shell; the battery shell houses the fast-charging battery cell and the electrolyte.

According to some examples of the present disclosure, the electrolyte includes a lithium salt and an organic solvent. Wherein, the lithium salt includes at least one selected from the group consisting of LiPF6, LiClO4, LiBF4, LiBOB, and LiAsF6.

A concentration of the lithium salt in the electrolyte is 0.5 mol/L to 2 mol/L. For example, it may specifically be approximately 1 mol/L or approximately 1.5 mol/L.

The organic solvent includes at least one selected from the group consisting of ethylene carbonate (EC), propylene carbonate (PC), diethyl carbonate (DEC), and propyl propionate (PP).

An electric product according to an example in the third aspect of the present disclosure, preparation materials of the electric product include the fast-charging battery cell or the lithium-ion battery.

According to some examples of the present disclosure, the electric product includes at least one selected from the group consisting of a digital product and a new energy vehicle. Wherein, the digital product includes at least one selected from the group consisting of a mobile phone, a tablet computer, a camera, and a laptop.

Unless otherwise specified, the term "approximately" in the present disclosure means a permissible error range of ±2%. For example, "approximately 100" actually means 100 ± 2% × 100.

Unless otherwise specified, the phrase "between... and..." includes both specified value at two endpoints. For example, "between 2 and 3" includes values 2 and 3 at two endpoints.

The additional aspects and advantages of the present disclosure will be partly set forth in the following description, and some will become apparent from the following description, or may be understood through the practice of the present disclosure.

### BRIEF DESCRIPTION OF THE DRAWINGS

The present disclosure will be further described with reference to the attached drawings and examples hereinafter, in which:

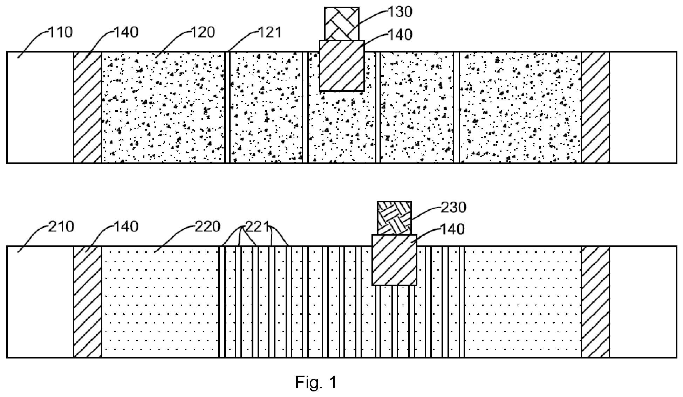

Fig.1 is a schematic structural diagram of the positive electrode (top) and negative electrode (bottom) used in an example of the present disclosure.

Reference numerals:
positive electrode current collector 110, positive electrode coating 120, positive electrode coating gap 121, positive electrode tab 130, adhesive tape 140;
negative electrode current collector 210, negative electrode coating 220, negative electrode coating gap 221, negative electrode tab 230.

### DETAILED DESCRIPTION OF THE INVENTION

The following describes the examples of the present disclosure in detail. Examples of the embodiments are illustrated in the accompanying drawings, where the same or similar reference numerals throughout the drawings indicate the same or similar components or components with the same or similar functions. The examples described with reference to the drawings are illustrative and are only intended to explain the present disclosure, but should not be understood as limiting the present disclosure.

In the description of the present disclosure, unless otherwise explicitly specified, terms such as setting, installation, and connecting should be broadly interpreted. Those skilled in the art can reasonably determine the specific meanings of these terms in the present disclosure in combination with the specific content of the technical solutions.

### Example 1

Referring to Fig. 1, this example provided a fast-charging battery cell. The fast-charging battery cell was formed by winding a positive electrode, a separator, and a negative electrode. The total number of the winding layers was 20 layers. The separator was positioned between the positive electrode and the negative electrode.

As shown in Fig. 1 (top), the positive electrode used in this example included a positive electrode current collector 110, a positive electrode coating 120 located on a surface of the positive electrode current collector 110, and a centrally positioned positive electrode tab 130 electrically connected to the positive electrode current collector 110. The edges of the positive electrode tab 130 and the positive electrode coating 120 were affixed with an adhesive tape 140 to prevent edge burrs from piercing the separator and causing short circuits in the fast-charging battery cell.

Starting from the positive electrode tab 130, at the corners of the fast-charging battery cell, the positive electrode coating 120 was provided with positive electrode coating gaps 121. A total of n=3 layers (4 corners), positive electrode coating gaps were provided, and 5 positive electrode coating gaps were provided at each corner.

Each positive electrode coating gap was a solid-line gap with a width of 80 µm and a depth of 15 µm. At each corner, the spacing between adjacent positive electrode coating gaps was 1.5 mm. The positive electrode coating gaps extended through and across the positive electrode coating.

The positive electrode was prepared as follows: LiCoO2 (purchased from Xiamen Tungsten New Energy, China) as a positive electrode active material, acetylene black as a conductive agent, carbon nanotubes as a conductive agent, and polyvinylidene fluoride (PVDF) as a binder were mixed and homogenized in a weight ratio of 97.9:0.6:0.5:1.0 in N-methylpyrrolidone (NMP), and then coated onto both sides of an aluminum foil as a positive electrode current collector to form a positive electrode coating with a single-side thickness of 35 µm. Then the coated foil was cold-pressed and slit to obtain a desired dimension. Finally, laser etching technology was used to create the positive electrode coating gaps according to the above parameters.

As shown in Fig. 1 (bottom), the negative electrode used in this example included a negative electrode current collector 210, a negative electrode coating 220 positioned on a surface of the negative electrode current collector 210, and a centrally positioned negative electrode tab 230 electrically connected to the negative electrode current collector 210. The edges of the negative electrode tab 230 and the negative electrode coating 220 were affixed with a adhesive tape 140 to prevent edge burrs from piercing the separator and causing short circuits in the fast-charging battery cell.

The negative electrode coating 220 was provided with negative electrode coating gaps 221 around the projection positions of the positive electrode tab 130 on the negative electrode. The negative electrode coating gaps 221 were evenly distributed over the entire surface of the negative electrode, with a total of m=3 layers. The negative electrode coating gaps 221 were solid-line gaps with a width of 100 µm and a depth of 15 µm. The spacing between adjacent negative electrode coating gaps was 1.5 mm. The negative electrode coating gaps extended through and across the negative electrode coating.

The negative electrode was prepared as follows: a negative electrode active material, a dispersant, and a binder were mixed and slurried in a weight ratio of 97.7:1:1.3 in water. The resulting slurry was coated onto both sides of a copper foil as a negative electrode current collector to obtain a negative electrode coating with a single-side thickness of 40 µm. Then the coated foil was cold-pressed and slit to obtain a desired dimension. Finally, laser etching was performed on the surface of the negative electrode coating to create the negative electrode coating gaps according to the above parameters.

The negative electrode active coating used in this example was a mixture formed by a weight ratio of 9:1 of graphite and a silicon-carbon negative electrode material, both purchased from Zichen Co.,Ltd, China.

Separator: The separator used in this example was purchased from Zhuogao Co.,Ltd, China, and composed of a polypropylene (PP) separator base layer and a coating on the surface of the PP separator base layer. The coating had a thickness of 2 µm and was formed by mixing polyvinylidene fluoride and alumina ceramic particles in a weight ratio of 50%:50%

It should be noted that the lengths of the positive electrode and negative electrode, the number and width of the positive electrode coating gaps and negative electrode coating gaps in Fig. 1 were all illustrative. The parameters measured from the figure do not represent the actual parameters of this example.

Examples 2 to 11 and Comparative Example 1 each provided a fast-charging battery cell, with specific differences from Example 1 as follows.

Some parameters were different, with the specific differences shown in Table 1.

**Table 1: Partial Parameters of Examples 1 to 11 and Comparative Example 1**

| Example | N | n | m | Example | N | n | m |
|---|---|---|---|---|---|---|---|
| Example 1 | 20 | 3 | 3 | Example 8 | 12 | 6 | 6 |
| Example 2 | 20 | 6 | 3 | Example 9 | 20 | 20 | 20 |
| Example 3 | 20 | 10 | 3 | Example 10 | 20 | 12 | 12 |
| Example 4 | 20 | 6 | 6 | Example 11 | 12 | 12 | 12 |
| Example 5 | 20 | 6 | 8 | Comparative Example 1 | 20 | 0 | 0 |
| Example 6 | 20 | 6 | 10 | Comparative Example 2 | 20 | 6 | 0 |
| Example 7 | 12 | 3 | 6 | Comparative Example 3 | 20 | 0 | 6 |

### Application Example

This example provided a lithium-ion battery, specifically composed of a battery shell, a battery cell, and an electrolyte. Wherein, the battery shell housed the battery cell and the electrolyte; the electrolyte saturated the battery cell; and the battery cell was the fast-charging battery cell provided in the examples or the comparative examples.

The preparation method of the electrolyte was as follows: ethylene carbonate (EC), propylene carbonate (PC), diethyl carbonate (DEC), and propyl propionate (PP) were mixed in a volume ratio of 1:1:4:4 to obtain a mixed organic solvent. Then, the fully dried lithium salt, LiPF6 was dissolved in the mixed organic solvent at a concentration of 1 mol/L to prepare the electrolyte.

### Testing Example

The charging window and cycling performance of the lithium-ion battery obtained from the application example were tested in this example.

Charging window testing protocol: The battery was charged at a specific constant rate X to 4.5V, charged at a constant voltage (CV) until the current dropped to a cutoff rate of 0.05C, and discharged at a constant current of 0.7C to 3.0V. After 20 cycles, the interface was disassembled. If there was no lithium plating at the interface, it was considered that the charging capability passed at the charging rate of X, and the charging rate of X+0.1C was measured until the charging rate (charging capability) that just does not cause lithium plating was obtained. The test results were recorded in Table 2.

Cycling protocol: The battery was charged at a constant rate which was the charging rate obtained from the charging window test that just does not cause lithium plating to 4.25V, charged at a constant current (CC) of 1.8C to 4.5V, charged at a constant voltage (CV) until the current dropped to a cutoff rate of 0.05C, and discharged at a constant current of 0.7C to 3.0V. The number of cycles until the capacity fell below 80% was record. The test results were shown in Table 2.

**Table 2: Performance of Fast-Charging Battery cells from Examples and Comparative Examples**

| Example | Charging Capability / C | Number of Cycles |
|---|---|---|
| Example 1 | 2.8C | 700 |
| Example 2 | 2.8C | 810 |
| Example 3 | 2.8C | 870 |
| Example 4 | 3.0C | 1000 |
| Example 5 | 3.1C | 950 |
| Example 6 | 3.1C | 910 |
| Example 7 | 2.9C | 1000 |
| Example 8 | 3.1C | 950 |
| Example 9 | 3.0C | 500 |
| Example 10 | 3.0C | 600 |
| Example 11 | 3.1C | 550 |
| Comparative Example 1 | 2.4C | 200 |
| Comparative Example 2 | 2.6C | 500 |
| Comparative Example 3 | 2.8C | 600 |

As can be seen from the comparison of results from Examples 1 to 3, when the number of layers with the negative electrode coating gaps remains unchanged, the charging capability of the fast-charging battery cell remains essentially unchanged. However, as the number of layers with the positive electrode coating gaps increases, the cycling performance shows trend to improve. This is due to the fact that the charging capability mainly depends on the ability of negative electrode to accept lithium ions, while the cycling performance depends on factors such as the ability of both the negative electrode and positive electrode to consume the electrolyte and the amount of electrolyte retained. Therefore, increasing the number of layers with positive electrode coating gaps enhances cycling performance.

As can be seen from the comparison of Examples 2, 4 to 6, when the number of layers with the positive electrode coating gaps remains constant and the number of layers with the negative electrode coating gaps increases, the charging capability of the fast-charging battery cell shows a trend of initially rising and then stabilizing, while the cycling performance shows a trend of initially rising and then declining. This is due to the fact that the current density of the negative electrode tends to stabilize when farther from the negative electrode tab, and further increasing the number of layers with negative electrode coating gaps does not significantly affect the negative the ability of electrode ability to accept lithium ions. However, as the number of negative electrode coating gaps increases, it increases the side reactions between the silicon-carbon negative electrode material and the electrolyte, thereby reducing cycling performance.

As can be seen from the comparison of Examples 7 to 8 and 11 with other examples, when the number of winding layers of the fast-charging battery cell is low, the technical solutions provided in the present disclosure are still applicable and can achieve good technical effects.

As can be seen from the comparison of Example 1, Example 4, and Examples 8 to 11, when the ratio of positive electrode coating gaps to negative electrode coating gaps remains constant, as n/N increases, both charging capability and cycling performance show a trend of initially rising and then declining. The reason for this is that as n/N increases, the ability of negative electrode to accept lithium ions and the liquid storage capacity of electrolyte improve, and side reactions also increase. These three factors have different weights, and their combined effect leads to the above results. Additionally, by keeping the ratio of positive electrode coating gaps to negative electrode coating gaps and n/N constant, and increasing the overall winding layers of the fast-charging battery cell, the charging capability and cycling performance slightly decrease. This is due to the fact that the fast-charging battery cell with large capacity has reduced heat dissipation capacity, which in turn increases the occurrence of side reactions.

As can be seen from the comparison of the examples with Comparative Example 1, the fast-charging battery cell provided in the present disclosure can effectively enhance charging capability and cycling performance, by reasonably setting the positions of gaps on the positive electrode and negative electrode. The lithium-ion battery including the above fast-charging battery cell exhibits excellent performance and is expected to be used in digital products and new energy vehicles.

As can be seen from the comparison of Example 4 with Comparative Examples 1 to 3, if only positive electrode coating gaps or only negative electrode coating gaps are provided, the fast-charging and cycling performance of the fast-charging battery cell provided in the present disclosure can be enhanced within a small range, but the enhancement effect is very limited.

The examples of the present disclosure have been described in detail with reference to the attached drawings hereinabove, but the present disclosure is not limited to the above examples. Various changes can be made within the knowledge of those skilled in the art without departing from the purpose of the present disclosure.

## Claims

1. A fast-charging battery cell formed by winding a positive electrode, a separator, and a negative electrode; the separator is positioned between the positive electrode and the negative electrode; the negative electrode comprises a negative electrode current collector, a negative electrode coating located on a surface of the negative electrode current collector, and a centrally positioned negative electrode tab electrically connected to the negative electrode current collector; the positive electrode comprises a positive electrode current collector, a positive electrode coating located on a surface of the positive electrode current collector, and a centrally positioned positive electrode tab electrically connected to the positive electrode current collector;
a positive electrode coating gap is provided on the positive electrode coating at corners of the fast-charging battery cell, starting from the positive electrode tab;
a negative electrode coating gap is provided on the negative electrode coating surrounding a projection position of the positive electrode tab on the negative electrode.

2. The fast-charging battery cell according to claim 1, wherein a total number of winding layers of the fast-charging battery cell is N, and a number of winding layers containing the positive electrode coating gap is n; and 1≤n≤N/2; and/or,
a total number of winding layers of the fast-charging battery cell is N, and a number of winding layers containing the negative electrode coating gap is m; and 3≤m≤N/2.

3. The fast-charging battery cell according to claim 1, wherein the positive electrode coating gap and/or the negative electrode coating gap is a continuous solid-line gap or a dashed line gap formed by connected hole structures.

4. The fast-charging battery cell according to claim 3, wherein a width of the positive electrode coating gap is 20 µm to 80 µm; and/or, a width of the negative electrode coating gap is 30 µm to 120 µm.

5. The fast-charging battery cell according to claim 3, wherein a depth of the positive electrode coating gap is 1/4 to 2/3 of a thickness of the positive electrode coating; and/or, a depth of the negative electrode coating gap is 1/4 to 2/3 of a thickness of the negative electrode coating.

6. The fast-charging battery cell according to claim 3, wherein a spacing between the negative electrode coating gaps is 1 mm to 2 mm.

7. The fast-charging battery cell according to claim 2, wherein the total number of winding layers N ranges from 10 to 50; and/or, preparation materials for the negative electrode coating comprises a silicon-based negative electrode material.

8. The fast-charging battery cell according to any one of claims 1 to 7, wherein a thickness of the positive electrode coating is 20 µm to 100 µm; and/or, a thickness of the negative electrode coating is 40 µm to 120 µm.

9. A lithium-ion battery comprising the fast-charging battery cell of any one of claims 1 to 7, and an electrolyte that saturates the fast-charging battery cell.

10. An electric product, wherein preparation materials for the electric product comprises the fast-charging battery cell of any one of claims 1 to 8, or the lithium-ion battery of claim 9.
